Europäisches Patentamt

European Patent Office

Office européen des brevets

(19)

(11) Numéro de publication: **0 230 825**
**B1**

(12) FASCICULE DE BREVET EUROPEEN

(45) Date de publication du fascicule du brevet:
**22.03.89**

(51) Int. Cl.⁴: **B60N 1/06**

(21) Numéro de dépôt: **86402851.9**

(22) Date de dépôt: **18.12.86**

(54) **Dispositif à module standard pour le réglage en hauteur de l'assise d'un siège.**

(30) Priorité: **23.12.85 FR 8519051**

(43) Date de publication de la demande:
**05.08.87 Bulletin 87/32**

(45) Mention de la délivrance du brevet:
**22.03.89 Bulletin 89/12**

(84) Etats contractants désignés:
**AT BE CH DE ES GB GR IT LI LU NL SE**

(56) Documents cités:
**EP-A- 0 047 703**
**DE-A- 2 553 949**
**FR-A- 1 352 981**
**FR-A- 2 172 689**
**FR-A- 2 262 610**
**FR-A- 2 457 790**
**NL-A- 7 714 516**

(73) Titulaire: **A & M COUSIN ETABLISSEMENTS COUSIN FRERES, Le Bois de Flers, F-61103 Flers Cédex(FR)**

(72) Inventeur: **Pipon, Yves, La Garenne St Georges des Groseillers, F-61100 Flers(FR)**
Inventeur: **Droulon, Georges, Rue de la Garenne St Georges des Groseillers, F-61100 Flers(FR)**

(74) Mandataire: **Madeuf, Claude Alexandre Jean et al, CABINET MADEUF 3, avenue Bugeaud, F-75116 Paris(FR)**

ACTORUM AG

## Description

Les véhicules modernes sont équipés de sièges surtout à l'avant, qui peuvent être réglés d'avant en arrière, horizontalement, en hauteur par réglage vertical de l'assise, soit d'avant en arrière, soit d'arrière en avant, soit même verticalement par soulèvement de l'avant et de l'arrière.

Il en est de même pour le dossier de ces sièges qui peut être plus ou moins incliné à la volonté de l'utilisateur.

Tous ces dispositifs ont pour but d'éviter au maximum la fatigue tant du conducteur que du passager pendant des trajets plus ou moins longs.

Cependant, en ce qui concerne le réglage de l'assiette de l'assise, les dispositifs, proposés jusqu'à présent, sont d'une réalisation assez compliquée et donc coûteuse car ils ont tous été étudiés pour une adaptation bien déterminée soit le réglage de l'avant de l'assise, soit le réglage de l'arrière de l'assise, soit le réglage vertical de l'avant et de l'arrière mais en fonction d'un siège déterminé et d'un véhicule déterminé.

La présente invention remédie à ces inconvénients en créant un dispositif à module standard qui permet des adaptations diverses pour les trois solutions préconisées à savoir:

a) rehausse de l'avant de l'assise (soulèvement et soulagement des cuisses du passager)
b) soulèvement de l'arrière de l'assise (rehaussement pour des passagers de petite taille)
c) rehaussement avant et arrière ou abaissement suivant la corpulence du conducteur ou passager.

En utilisant les dispositifs à module standard, quel que soit le type du siège et du véhicule, on obtient des produits de très haute performance mais à des prix relativement acceptables.

De plus, ces dispositifs à module standard permettent d'avoir une commande manuelle ou à moteur avec des organes de réglage continu ou discontinu 0° ou à positions définies par un système à écrous, ce qui est incontestablement une amélioration très sensible des dispositifs de rehausse actuellement connus.

Conformément à l'invention un dispositif de réglage tel que défini dans le préambule de la revendication 1 est caractérisé en ce que l'aile maintient au moins un mécanisme d'entraînement en rotation d'un balancier dont l'extrémité avant solidaire d'un axe coopère avec une boutonnière percée dans une pièce intermédiaire solidaire de la partie latérale d'une carcasse de siège, tandis que l'extrémité arrière est percée d'une boutonnière recevant un axe solidaire de la partie avant d'un deuxième balancier dont la partie centrale est articulée sur un axe fixé sur l'aile verticale du support et dont la partie arrière maintient un axe monté dans un palier de la partie arrière de la carcasse du siège, l'arbre de commande de la rotation du mécanisme permettant le mouvement du balancier étant muni d'un organe de commande manuel.

Suivant une autre caractéristique de l'invention, l'arbre de commande du mécanisme est entraîné par un moto-réducteur.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.

La fig. 1 est une élévation latérale d'une première forme de réalisation d'un dispositif à module standard pour le réglage en hauteur de l'assise d'un siège (réglage avant-arrière).

La fig. 2 est un plan correspondant à la fig. 1.

La fig. 3 est une élévation latérale correspondant à la fig. 1 mais montrant une variante motorisée du dispositif à module standard qui peut être commandé soit en partant d'une action réalisée sur un bouton de commande disposé dans un endroit accessible dans l'habitacle soit par un dispositif électronique ou microprocesseur équipé d'une mémoire.

La fig. 4 est un plan correspondant à la fig. 3.

La fig. 5 est une élévation latérale d'une deuxième variante de réalisation du dispositif à module standard motorisé dont l'action du module n'agit que pour un réglage arrière, le point pivot avant étant solidaire de l'équerre fixée à la glissière.

La fig. 6 est un plan correspondant à la fig. 5.

La fig. 7 est une élévation latérale d'une troisième forme de réalisation du dispositif à module standard à commande manuelle mais comprenant un organe de blocage discontinu 0° ou à positions définies par un système à crans avec aide du rehaussement par ressort.

La fig. 8 est un plan correspondant à la fig. 7.

La fig. 9 est une élévation d'une quatrième forme de réalisation très proche de celle de la fig. 7 dont la commande motorisée est obtenue par un bouton disposé sur le levier dont ce dernier a la fonction d'aider au relevage du système lorsque l'utilisation est entreprise par une personne dépassant largement la force tarée du ressort de relevage.

La fig. 10 est un plan correspondant à la fig. 9.

La fig. 11 est une cinquième forme de réalisation du dispositif à module standard avec un dispositif de blocage discontinu 0° ou à positions définies par un système à crans motorisé dont la commande de motorisation se situe loin du dispositif de réglage en hauteur.

La fig. 12 est un plan correspondant à la fig. 11.

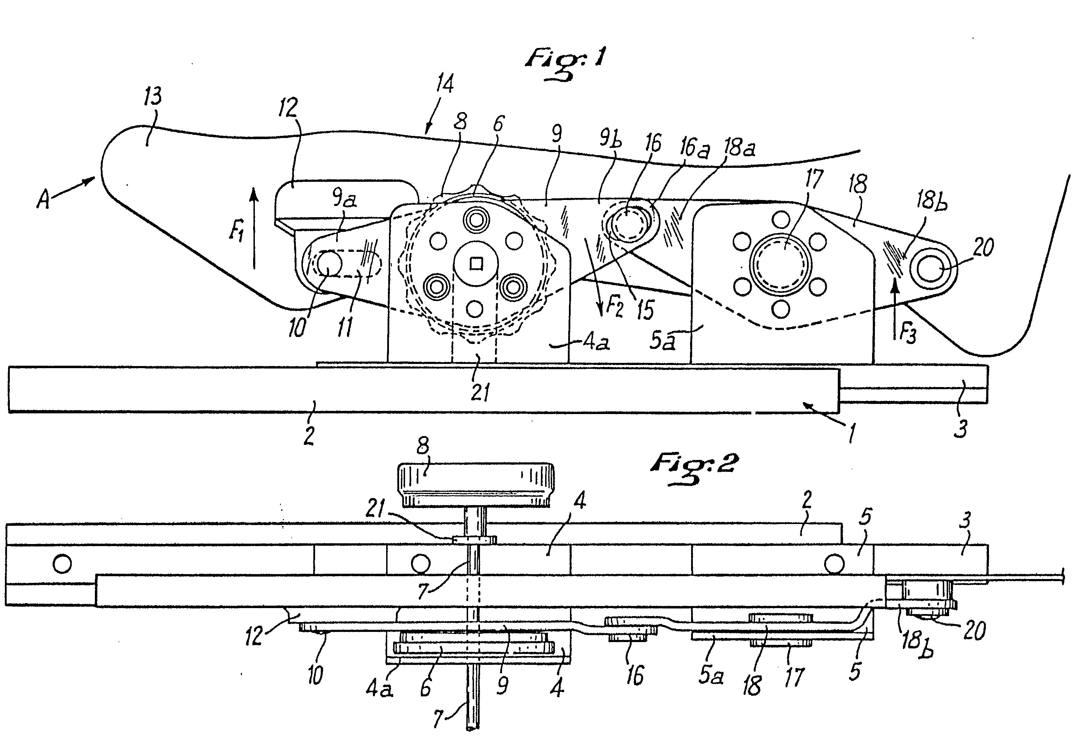

A la fig. 1, on a représenté une glissière 1 de réglage longitudinal d'un siège qui est composée d'un élément fixe 2 et d'un élément mobile 3 dont la face supérieure supporte, fixés par tous moyens convenables, deux supports 4, 5 en "L" dont les parties verticales 4a, 5a sont décalées dans le plan horizontal comme cela est visible à la fig. 2. L'aile verticale 4a du support 4 porte intérieurement un mécanisme 6 permettant d'obtenir un mouvement circulaire continu du mécanisme d'articulation du dossier du siège. L'arbre 7, qui commande les mécanismes placés de part et d'autre du siège puisque les sièges du véhicule sont équipés de deux glissières 1, est entraîné, dans le cas présent, par au moins un bou-

ton de manœuvre 8 qui peut être cranté de façon à faciliter sa préhension.

La partie mobile de chaque mécanisme 6 permet le déplacement angulaire d'un balancier 9 qui est centré sur la partie mobile du mécanisme 6 et qui comporte, à l'extrémité 9a (extrémité avant), un axe 10 pouvant coulisser dans une boutonnière 11 solidaire d'une pièce intermédiaire 12 fixée sur la partie latérale 13 de la carcasse 14 d'un siège.

L'extrémité 9b du balancier 9 est percée d'une boutonnière 15 dans laquelle pénètre et peut se déplacer un axe 16 à tête 16a, cet axe étant fixé à l'extrémité avant 18a d'un deuxième balancier 18 monté sur un axe 17 fixé à la partie supérieure 5a verticale de la pièce 5. Finalement, l'extrémité 18b du balancier 18 porte un axe 20 passant à travers un trou percé à l'arrière de la partie latérale 13 de la carcasse 14 du siège.

Finalement, il est prévu un support vertical 21 maintenant l'arbre 7 près du bouton de manœuvre 8.

Le dispositif fonctionne de la façon suivante:

Comme le mécanisme 6 est un mécanisme irréversible c'est-à-dire que les dentures, permettant son fonctionnement, sont telles qu'elles ne peuvent tourner que par un effort impératif exercé sur le bouton de manœuvre 8, en état normal les deux balanciers 9 et 18 occupent donc la position représentée à la fig. 1 et le siège est donc dans une position déterminée. Si, pour une raison quelconque, on désire remonter l'assise du siège, l'utilisateur manœuvre le bouton 8, par exemple dans le sens contraire aux aiguilles d'une montre, et, de ce fait, la partie avant 9a du balancier 9 tend à pivoter autour de l'arbre 7 dans le sens de la flèche $F_1$ (voir fig. 1); ce mouvement est possible du fait que l'axe 10 est dans la boutonnière 11. Mais, en même temps, la partie arrière 9b du balancier 9 effectue un mouvement dans le sens inverse (flèche $F_2$) et, du fait de la boutonnière 15, entraîne l'axe 16 solidaire du balancier 18 dont la partie avant 18a pivote dans le sens de la flèche $F_2$ mais dont la partie arrière 18b pivote dans le sens de la flèche $F_3$ (voir fig. 1) en provoquant ainsi un rehaussement de la partie arrière du siège puisque la carcasse 14 est solidaire des axes 10 et 20.

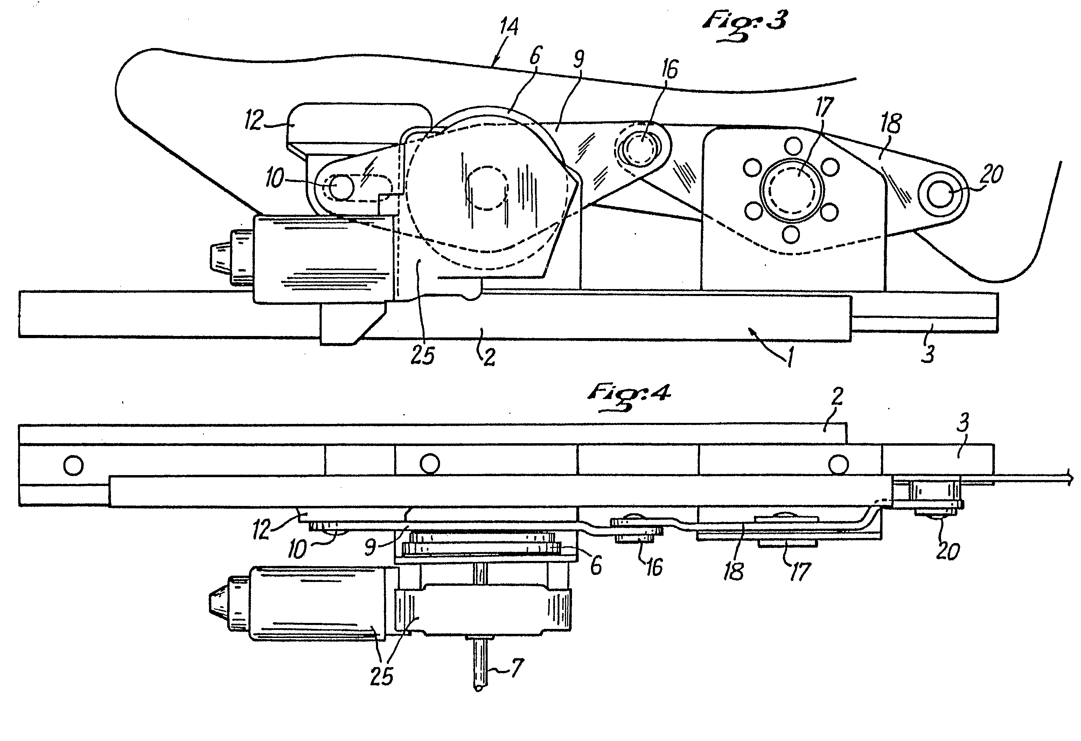

Aux fig. 3 et 4, le dispositif est strictement le même qu'aux figures précédentes et donc les références sont les mêmes, mais l'arbre 7 est entraîné en rotation par un groupe moto-réducteur 25, ce qui permet de motoriser les mouvements de la rehausse.

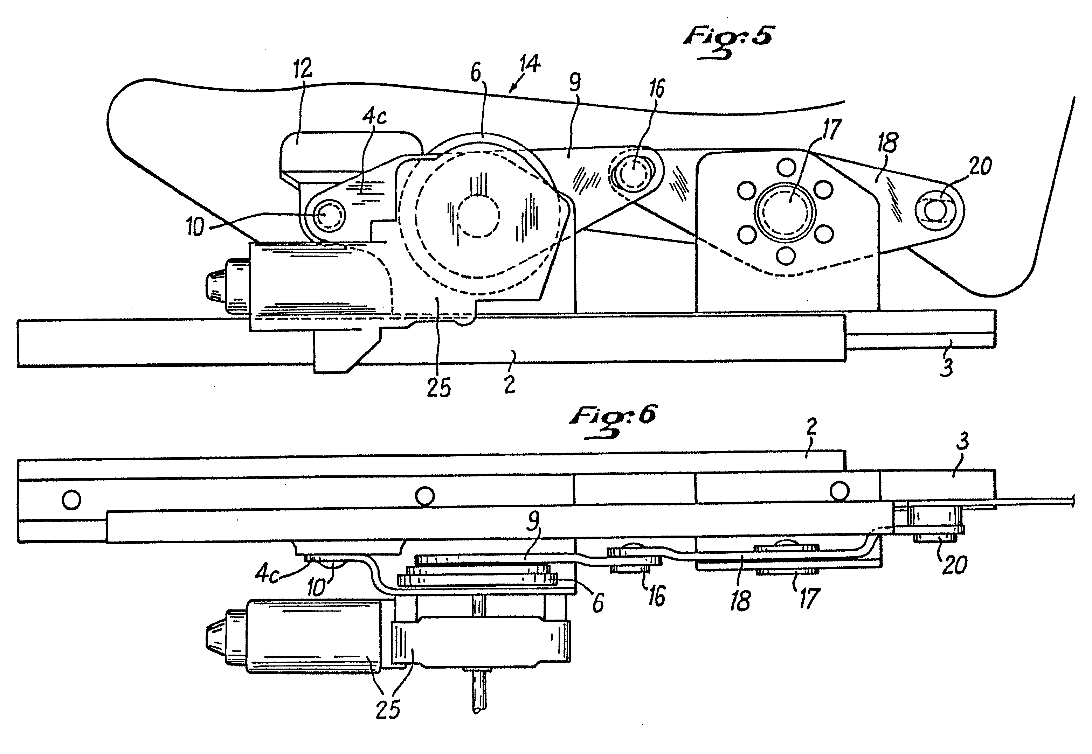

Aux fig. 5 et 6, le mécanisme et strictement le même que dans les cas précédents, mais le dispositif est réduit uniquement au basculement de l'arrière. L'équerre 4 comporte une patte 4c qui relie par l'axe 10 la partie fixe de la glissière à la partie intermédiaire 12 fixée sur la partie latérale 13 de la carcasse 14 d'un siège. Il faut noter que si cette disposition du module est inversée, le basculement du siège se fait à l'avant.

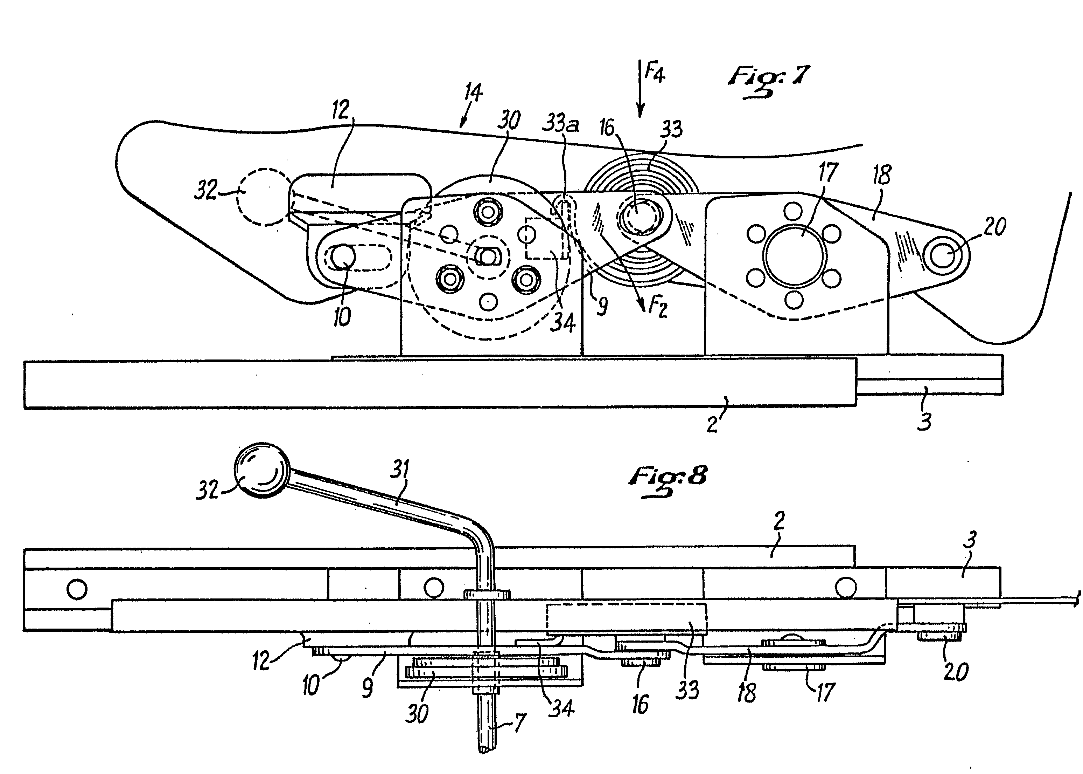

Aux fig. 7 et 8, la rehausse est constituée des mêmes éléments que précédemment mais, le dispositif d'entraînement 30 peut être, soit un module de principe discontinu 0° muni d'organes de blocage connus en soi, soit une articulation discontinue à blocage angulaire par grain et, de ce fait, la commande de l'arbre 7 s'effectue à l'aide d'un levier 31 muni d'un bouton 32.

Cependant, il y a lieu de remarquer que, dans le cas d'un dispositif d'entraînement 30 constitué par un module de principe discontinu 0° à commande manuelle ou à positions définies par un système à crans, il est absolument nécessaire de prévoir au moins un, sinon deux ressorts de forte capacité 33 concentriques à l'axe 16 dont l'extrémité libre 33a est fixée sur une patte 34 solidaire du balancier 9 et qui tend à faire pivoter ce dernier dans le sens de la flèche $F_2$ (voir fig. 7).

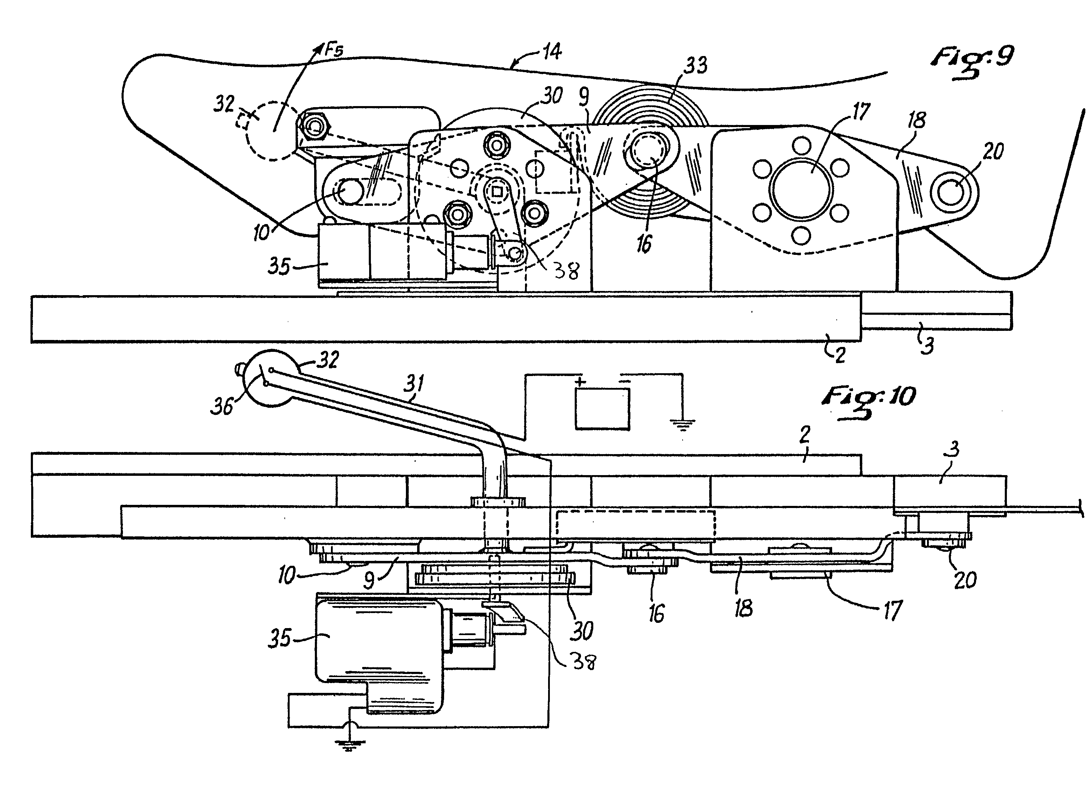

Aux fig. 9 et 10, le mécanisme de rehausse est identique à celui des fig. 7 et 8 mais le mouvement du dispositif d'entraînement 30 est commandé par un groupe moto-réducteur 35 dont le circuit électrique d'alimentation est sous contrôle d'un interrupteur 36 placé dans le bouton de manœuvre 32.

Du fait que, d'une part, l'on puisse commander la motorisation du verrouillage-déverrouillage par une action, par exemple, du pouce sur l'interrupteur 36 et que la tenue du levier 31 est réalisée par la même main, il est aisé de pouvoir aider avec l'assistance du levier 31 le réglage de l'assiette du siège. Par exemple si le ressort est taré au minimum pour un poids d'utilisateur de 60 kilos, il est possible pour l'utilisateur de relever le siège avec l'aide du levier 31 suivant la flèche $F_5$ (voir fig. 9) si son poids est largement supérieur à 60 kilos et de commander simultanément le blocage du module lorsque l'action sur l'interrupteur 36 sera arrêtée.

Dans le cas où l'utilisateur est d'un poids inférieur à la force de 60 kilos, il aura à exercer une force équivalente de la différence sur le levier 31 pour descendre, étant entendu que lorsqu'il est sur le siège, le ressort tend à le faire remonter au maximum.

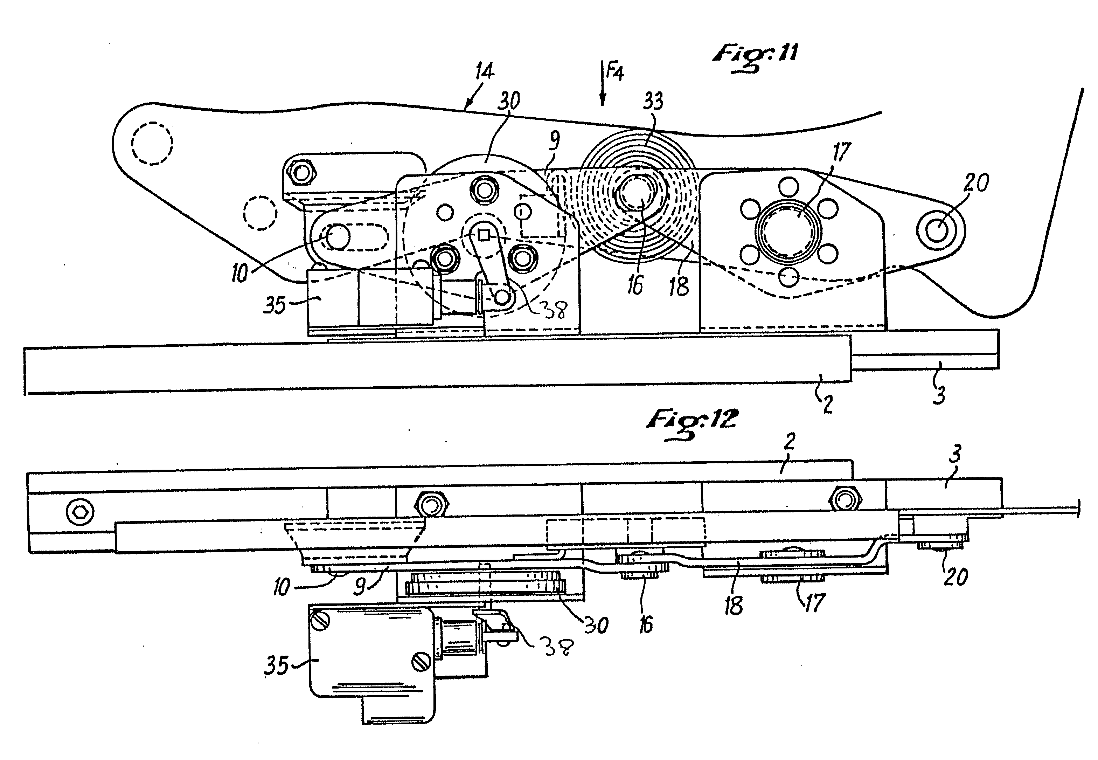

Finalement, les fig. 11 et 12 montrent le même dispositif que dans le cas des fig. 9 et 10 mais dont la commande de blocage-déblocage du module 30 est obtenue par une motorisation 35 qui est commandée par un bouton qui peut être disposé à n'importe quel endroit de l'habitacle dans le véhicule. Dans ce principe de réhaussement, le ressort est largement taré pour une force équivalente à un poids de 90 kilos, aussi pour l'abaissement du siège il faut pousser suivant la flèche $F_4$ pour obtenir la position choisie. Quand celle-ci est obtenue, il suffit de relâcher le bouton de commande pour obtenir le blocage du module. On peut aussi utiliser un circuit électronique de commande incorporant au moins un micro-processeur.

## Revendications

1. Dispositif à module standard pour le réglage en hauteur de l'assise d'un siège dans lequel l'élément mobile (3) des glissières (2, 3) de réglage longitudinal du siège porte sur sa face supérieure des supports (4, 5) en "L" dont les ailes verticales (4a, 5a) servent de support à des points de pivotement (7, 17) des organes de réglage en hauteur, caractérisé en ce que l'aile (4a) maintient au moins un mécanisme (6) d'entraînement en rotation d'un balancier (9) dont l'extrémité avant (9a) solidaire d'un axe (10) coopère avec une boutonnière (11) percée dans une pièce intermédiaire (12) solidaire de la partie latérale (13) d'une carcasse (14) de siège, tandis que l'extrémité arrière (9b) est percée d'une boutonnière (15) recevant un axe (16) solidaire de la partie avant (18a) d'un deuxième balancier (18) dont la partie centrale est articulée sur un axe (17) fixé sur l'aile verticale (5a) du support (5) et dont la partie arrière (18b) maintient un axe (20) monté dans un palier de la partie arrière de la carcasse (14) du siège, l'arbre (7) de commande de la rotation du mécanisme (6) permettant le mouvement du balancier (9) étant muni d'un organe de commande (8) manuel.

2. Dispositif suivant la revendication 1, caractérisé en ce que l'arbre de commande (7) du mécanisme (6) est entraîné par un moto-réducteur (25).

3. Dispositif suivant les revendications 1 et 2, caractérisé en ce que le mécanisme (6) est un mécanisme continu à denture à blocage par irréversibilité.

4. Dispositif suivant les revendications 1 et 2, caractérisé en ce que le dispositif d'entraînement (30) permettant un mouvement circulaire continu est un module de principe discontinu 0° à commande manuelle ou motorisée.

5. Dispositif suivant la revendication 4, caractérisé en ce qu'au moins un ressort (33), taré pour un poids minimum de l'utilisateur, aide au soulèvement de l'assise du siège.

6. Dispositif suivant la revendication 5, caractérisé par le fait qu'un levier 31 permet d'aider l'utilisateur à monter ou à descendre suivant que son poids est supérieur ou inférieur à la force tarée du ou des ressorts (33) de relevage.

7. Dispositif suivant l'une des revendications 1, 2, 4 et 5, caractérisé en ce que le groupe moto-réducteur est commandé à l'aide d'un interrupteur (36) placé sur le levier (31) permettant le réglage de la rehausse.

8. Dispositif suivant l'une des revendications 1 à 6, caractérisé en ce que le mécanisme de rehausse est équipé pour son déplacement vertical d'un moyen électronique à mémorisation et/ou d'un microprocesseur.

## Patentansprüche

1. Standardmodul-Vorrichtung zur Höhenverstellung der Sitzfläche eines Sitzes, bei der das bewegliche Bauteil (3) der Gleitbahnen (2, 3) zur Längsverstellung des Sitzes auf seiner Oberseite L-förmige Träger (4, 5) trägt, deren senkrechte Schenkel (4a, 5a) als Stütze für Schwenkpunkte (7, 17) der Höhenverstellorgane dienen, dadurch gekennzeichnet, daß der Schenkel (4a) wenigstens ein Drehantriebsgetriebe (6) für eine Schwinge (9) stützt, deren mit einer Achse (10) fest verbundenes vorderes Endstück (9a) mit einem Langloch (11) zusammenwirkt, das in ein mit dem Seitenteil (13) vom Sitzgestell (14) fest verbundenes Zwischenstück (12) eingearbeitet ist, wogegen das hintere Endstück (9b) von einem Langloch (15) durchsetzt ist, das eine Achse (16) aufnimmt, die mit dem vorderen Abschnitt (18a) einer zweiten Schwinge (18) fest verbunden ist, deren Mittelteil auf einer am senkrechten Schenkel (5a) des Trägers (5) befestigten Achse (17) schwenkbar angeordnet ist, und deren hinterer Abschnitt (18b) eine Achse (20) stützt, die in einem Lager des hinteren Teils vom Gestell (14) des Sitzes gelagert ist, wobei die Welle (7) für den Drehantrieb des Getriebes (6), das die Bewegung der Schwinge (9) ermöglicht, mit einem Handbetätigungsorgan (8) versehen ist.

2. Vorrichtung nach Anspruch 1, dadurch gekennzeichnet, daß die Betätigungswelle (7) des Getriebes (6) von einem Getriebemotor (25) angetrieben wird.

3. Vorrichtung nach den Ansprüchen 1 und 2, dadurch gekennzeichnet, daß das Getriebe (6) ein kontinuierliches Getriebe mit selbstsperrender Verzahnung ist.

4. Vorrichtung nach den Ansprüchen 1 und 2, dadurch gekennzeichnet, daß die eine kontinuierliche Kreisbewegung ermöglichende Antriebsvorrichtung (30) ein nach einem 0°-diskontinuierlichen Prinzip arbeitendes Modul mit manueller oder motorischer Betätigung ist.

5. Vorrichtung nach Anspruch 4, dadurch gekennzeichnet, daß wenigstens eine, für ein Mindestgewicht des Benutzers geeichte Feder (33) die Anhebung der Sitzfläche des Sitzes unterstützt.

6. Vorrichtung nach Anspruch 5, dadurch gekennzeichnet, daß ein Hebel (31) ermöglicht, den Benutzer beim Hoch- oder Tieferstellen zu unterstützen, je nachdem, ob sein Gewicht größer oder kleiner als die geeichte Kraft der Hochstellfeder(n) (33) ist.

7. Vorrichtung nach einem der Ansprüche 1, 2, 4 und 5, dadurch gekennzeichnet, daß der Getriebemotor mittels eines Schalters (36) betätigt wird, der auf dem die Hochstellung ermöglichenden Hebel (31) angeordnet ist.

8. Vorrichtung nach einem der Ansprüche 1 bis 6, dadurch gekennzeichnet, daß das Hochstellgetriebe für seine Vertikalverstellung mit einem elektronischen Mittel mit Speicherung und/oder mit einem Mikroprozessor versehen ist.

## Claims

1. A standard module device for adjusting the height of the sitting area of a seat in which the movable element (3) of the slides (2, 3) for longitudinally adjusting the seat carries on its upper surface L-shaped supports (4, 5) the vertical wings (4a, 5a) of which are used as supports for pivoting points (7, 17) of the height adjustment means, characterized in that the wing (4a) maintains at least one mechanism (6) for driving into rotation a rocking lever (9) the front end (9a) of which is rigidly connected to a pin (10) and cooperates with a button hole (11) pierced in an intermediate part (12) which is rigidly connected to the side area (13) of a seat framework (14), while the rear end (9b) is pierced with a button hole (15) receiving a pin (16) rigidly connected to the front area (18a) of a second rocking lever (18) the central area of which is articulated on a pin (17) fixed on the vertical wing (5a) of the support (5) and the rear area (18b) of which holds a pin (20) mounted in a bearing of the rear area of the seat framework (14), the shaft (7) for controlling the rotation of the mechanism (6) enabling the movement of the rocking lever (9) being provided with a manual control means (8).

2. Device according to claim 1, characterized in that the control shaft (7) of the mechanism (6) is driven by a reducing gear motor unit (25).

3. Device according to claims 1 and 2, characterized in that the mechanism (6) is a continuous mechanism with an irreversible blocking toothing.

4. Device according to claims 1 and 2, characterized in that the driving device (30) enabling a continuous circular motion is a 0° discontinuous principle module with a manual or motorized control.

5. Device according to claim 4, characterized in that at least one spring (33), calibrated for a user's minimum weight, facilitates lifting of the sitting area of the seat.

6. Device according to claim 5, characterized by the fact that a lever (31) enables to aid the user to move upward or downward, according to whether his weight is upper or lower than the calibrated force of the lifting spring(s) (33).

7. Device according to one of claims 1, 2, 4 and 5, characterized in that the reducing gear motor unit is controlled by means of a switch (36) placed on the lever (31) enabling the adjustment of the lifting system.

8. Device according to one of claims 1 to 6, characterized in that the lifting mechanism is fitted for its vertical movement with an electronic means with a memory and/or with a microprocessor.

Fig.1

Fig.2

_Fig: 3_

14

6  9  16

12

17  18

10

20

25  2  1  3

_Fig: 4_

2

3

12

10

9

6

16

18  17

20

25  7

EP 0 230 825 B1

*Fig.5*

*Fig.6*

EP 0 230 825 B1

*Fig. 7*

*Fig. 8*

Fig.9

Fig.10

EP 0 230 825 B1

*Fig. 11*

*Fig. 12*